Europäisches Patentamt

(19) European Patent Office

Office européen des brevets

(11) Publication number : **0 339 803 B1**

(12) **EUROPEAN PATENT SPECIFICATION**

(45) Date of publication of patent specification :
15.01.92 Bulletin 92/03

(51) Int. Cl.⁵ : **B01J 13/02,** C08G 77/08

(21) Application number : **89303181.5**

(22) Date of filing : **31.03.89**

(54) Method for microencapsulating a compound of a platinum group metal.

(30) Priority : 08.04.88 US 179347

(43) Date of publication of application :
02.11.89 Bulletin 89/44

(45) Publication of the grant of the patent :
15.01.92 Bulletin 92/03

(84) Designated Contracting States :
BE DE FR GB

(56) References cited :
DE-A- 1 928 552
US-A- 3 784 391
US-A- 3 954 678

(73) Proprietor : **DOW CORNING CORPORATION**
**3901 S. Saginaw Road**
**Midland Michigan 48686-0995 (US)**

(72) Inventor : **Juen, Donnie Ray**
**2502 Peterson Drive**
**Sanford Michigan 48657 (US)**

(74) Representative : **Laredo, Jack Joseph et al**
**Elkington and Fife Prospect House 8**
**Pembroke Road**
**Sevenoaks, Kent TN13 1XR (GB)**

## Description

This invention relates to microencapsulated materials. More particularly, this invention relates to an improved method for microencapsulating compounds of platinum or compounds of other elements from the platinum group of the Periodic Table. The encapsulated compounds are particularly useful as latent, heat-activated curing catalysts for one-part organosiloxane compositions that cure by a hydrosilation reaction and exhibit long term storage stability under ambient conditions.

Elastomers, resins and other products prepared by curing organosiloxane compositions are known in the art and exhibit properties which make them desirable for a variety of end uses. One of the mechanisms used to cure these organosiloxane compositions is the reaction between a polydiorganosiloxane containing in each molecule at least two ethylenically unsaturated hydrocarbon radicals bonded to silicon and an organohydrogensiloxane containing at least three silicon bonded hydrogen atoms per molecule. This reaction is conducted in the presence of a catalyst that is typically a platinum group metal or a compound thereof.

Because the curing reaction takes place under ambient conditions the catalyst and organohydrogensiloxane are usually packaged in separate containers and are not combined until the composition is to be cured. Two-package curable compositions are less than desirable for a number of reasons, including the need to homogeneously blend the ingredients of the composition to ensure a uniform cured product. Preparing large amounts of the curable composition requires accurate weighing or metering equipment or the use of pre-measured amounts of reactants. In addition, the mixing equipment required to homogeneously blend the ingredients may not be available at the location where the composition is to be applied and cured.

One method for avoiding the disadvantages of a two package organosiloxane composition is to isolate the platinum-containing catalyst from the other ingredients of the curable composition by microencapsulating it in a solid material that is insoluble in the composition under storage conditions but which melts or dissolves under the conditions used to cure the composition.

The prior art describes several methods for microencapsulating materials, including organosilicon compounds, utilizing either chemical or mechanical means. Chemical means typically include precipitation, polymerization and/or curing of the encapsulant in the presence of the material to be encapsulated. The material to be encapsulated is present as a dispersed phase of particles or droplets in a liquid medium and the processing conditions are such that the encapsulant forms a continuous, solid film around each suspended particle or droplet.

Useful encapsulants include thermoplastic and thermosetting organic polymers, crosslinkable gelatinous and resinous materials such gelatin and organic waxes that melt or soften at temperatures above about 50°C.

Chemical methods for microencapsulation are described in U.S. Patent No. 3,859,228, which issued to Morishita et al. on January 7, 1975 ; U.S. Patent No. 4,462,982, which issued to Samejima et al. on July 31, 1984 ; British Patent No. 1,354,694, which issued on May 30, 1974 ; U.S. Patent No. 4,411,933, which issued to Samejima et al. on October 25, 1983 ; U.S. Patent No. 4,402,856, which issued to Schnoering et al. on September 6, 1983 ; U.S. Patent No. 4,542,042, which issued to Samejima et al. on September 17, 1985 ; U.S. Patent No. 3,886,084, which issued to Vassiliades on May 27, 1975 ; U.S. Patent No. 4,181,639, which issued on January 1, 1980 ; U.S. Patent No. 4,389,330, which issued to Tice and Lewis on June 21, 1983 and U.S. Patent No. 3,523,906, which issued to Alois and Nicolas on August 11, 1970.

U.S. Patent No. 4,293,677, which issued to Imai on October 6, 1981, describes microencapsulating organohydrogensiloxanes using complex coacervation and in-situ polymerization, two of the most common techniques. In accordance with Example 1 of this patent, an aqueous gelatin solution adjusted to a pH of 9.5 was added to a solution of a trimethylsiloxy terminated polymethylhydrogensiloxane in molten paraffin wax. A 10 percent by weight solution of gum arabic is then added and the pH of the resultant emulsion is adjusted to 4 over a period of two hours to precipitate the mixture of the two polyelectrolytes that forms the encapsulant. The encapsulant is cured by gradually heating the dispersion of coated particles to a temperature of 50°C.

The in-situ polymerization process exemplified in Example 2 of the Imai patent involves the polymerization of styrene in the presence of a dimethylsiloxane/methylhydrogensiloxane copolymer as the dispersed phase of an emulsion wherein the aqueous phase contains a solubilized polyvinyl alcohol and potassium persulfate.

One of the most effective classes of platinum-containing catalysts for curing organosiloxane compositions of the type described in the Imai et al. patent are reaction products or complexes of an inorganic platinum compound such as hexachloroplatinic acid with liquid vinyl-containing organosilicon compounds such as sym-tetramethyldivinyldisiloxane. The resultant product is then diluted to the desired platinum content, typically between 0.1 and 1 percent by weight, using a liquid dimethylvinylsiloxy terminated polydimethylsiloxane.

When the present inventor attempted to microencapsulate one of these preferred platinum compounds by combining it with a solution of polystyrene in a water immiscible liquid, emulsifying the resultant composition in water and then evaporating the water immiscible liquid to precipitate the polystyrene as a coating around the droplets of catalyst composition, the resultant microcapsules were agglomerated and could not be isolated as a free flowing powder.

Washing the microcapsules with organic solvents such as toluene and ethanol did little to reduce the extent of agglomeration. Curable compositions containing these microcapsules, a vinyl-containing liquid polydimethylsiloxane and a dimethylsiloxane/methylhydrogensiloxane copolymer exhibited very poor storage stability under ambient conditions, indicating that some of the platinum compound was either initially present on the surface of the microcapsules or had diffused through the encapsulant during storage of the curable composition.

US-A-3954678 describes the encapsulation of silica gel within a semi-permeable membrane to form semipermeable microcapsules containing the silica gel, which may be used in the dry state. The microcapsules may incorporate a variety of catalysts including platinum group catalysts. Various methods may be used to prepare the microcapsules, the preferred being interfacial polycondensation.

The capsules are recovered by sedimentation in a gravitational, centrifugal or magnetic field, comprising decantation, dispersion in detergent solution, dilution and washing, optionally followed by drying.

United States Patent No. 4,784879, filed on July 20, 1987 and published on 15th November, 1988, discloses a method for preparing a microencapsulated platinum compound by precipitation or polymerization of the encapsulating polymer in the presence of an emulsion containing the platinum compound as the dispersed phase, followed by washing of the resultant microcapsules with a liquid that is a solvent for the platinum compound but not for the encapsulating polymer.

The washed microcapsules are isolated by filtration, resulting in agglomerated particles that can total up to 50% of the total yield. Attempts by the present inventor to mechanically break up these agglomerates resulted in fracturing of the microcapsules and liberation of the encapsulated platinum compound.

Although the concentration of agglomerated particles was considerably less than obtained using prior art methods for preparing the microcapsules, the presence of any agglomeration is considered undesirable. In addition, washing the microcapsules with liquid organic or organosilicon compounds is both costly and time consuming and is not practical for commercial scale production of microencapsulated platinum compounds. It would be desirable to isolate the microcapsules directly from the liquid medium in which they are formed.

The present inventor conducted investigations with the objective of defining a commercially feasible process for preparing a microencapsulated platinum compound in the form of a free flowing powder that is substantially free of agglomerated particles and contains substantially none of the platinum compound on the surface of the microcapsules.

Microcapsules comprising a liquid or solubilized compound of platinum or other platinum group metal dispersed in a matrix of a thermoplastic organic polymer are formed by precipitating the polymer from an emulsion containing the polymer and a finely divided form of the platinum compound as the dispersed phase. The resultant aqueous dispersion of microcapsules is atomized and the droplets produced are entrained in a high velocity stream of a heated gas. The liquid on the exterior of the microcapsules is rapidly evaporated, allowing the microcapsules to be isolated as a free flowing powder. The organic polymer is preferably derived from at least one ester of acrylic or methacrylic acid.

This invention provides a method for microencapsulating liquid or solubilized platinum group metal compounds where said platinum group metal is platinum, palladium or rhodium, the encapsulant is a thermoplastic organic polymer and said method comprises the following sequence of steps :

A. forming an emulsion comprising a continuous phase and a discontinuous phase, where the continuous phase comprises a first liquid and a surfactant, the discontinuous phase comprises (1) a second liquid that is immiscible with said first liquid, (2) a finely dispersed liquid or solubilized platinum group metal compound, and (3) a solubilized thermoplastic organic polymer that is both impervious to said compound and insoluble in said first liquid, the weight of said polymer being at least equal to the weight of said compound,

B. evaporating the second liquid to precipitate said polymer and form a dispersion of the microencapsulated platinum group metal compound in said first liquid ; and

C. recovering the microencapsulated platinum group metal compound by (1) atomizing a dispersion obtained in step B ; (2) entraining the atomized dispersion in a high velocity gas stream having a temperature at least equal to the boiling point of said first liquid ; (3) exposing the atomized dispersion to said gas stream for a sufficient time to evaporate substantially all of said first liquid ; and (4) recovering the microencapsulated platinum group metal compound from said gas stream as a homogeneous, free flowing powder.

As used herein, the term "platinum group metal compound" refers to compounds of elements in the platinum group of the periodic table of the elements. These elements include platinum, palladium and rhodium. Platinum compounds are preferred based on their activity as hydrosilation catalysts in curable organosiloxane compositions.

The inventive feature of the present method resides in atomizing the liquid composition in which the microcapsules have been formed and entraining the resultant finely divided droplets in a stream of heated gas to rapidly evaporate the liquid on the exterior of the microcapsules to form a free flowing powder that is substantially free of agglomerated particles.

The materials that are encapsulated in accordance with the present method are liquid and solubilized compounds of platinum or other element from the platinum group of the periodic table, which, as disclosed hereinbefore, includes platinum, palladium and rhodium. Reaction products and complexes of inorganic compounds of platinum, particularly compounds comprising platinum and halogen, with organosilicon compounds are preferred because these compounds are compatible with the reactants present in curable organosiloxane compositions and are, therefore, useful as curing catalysts for these compositions. The platinum group metal compounds can be dissolved or diluted with liquids that are miscible with the organic liquid used as a solvent for the encapsulating organic polymer. This solvent, together with the encapsulating polymer and platinum group metal compound, constitute the dispersed phase of the emulsion in which the microencapsulated platinum group metal compound is formed.

The platinum group metal compound together with any liquids used to dissolve and/or dilute the compound constitute up to 50 percent of the total weight of the platinum group metal compound and the thermoplastic organic polymer used to encapsulate the compound. It is not feasible to completely encapsulate a platinum compound and any associated liquid materials with the organic polymer when this limit is exceeded. Excess platinum compound typically collects on the surface of the microcapsules and often results in premature curing of organosiloxane compositions containing the microencapsulated platinum compound as a latent catalyst.

The platinum group metal compound and any associated solvents or diluents present in the final microcapsules preferably constitute no more than 30% of the combined weight of these materials and the organic polymer used to encapsulate them.

The continuous phase of the emulsion in which the microcapsules are formed comprises a solution of a surfactant in a liquid that is incompatible with the organic liquid comprising the dispersed phase and is a non-solvent for the encapsulating polymer and the platinum group metal compound. The liquid in the continuous phase is preferably water.

The purpose of the surfactant is to facilitate formation of the emulsion. It is believed that any of the known anionic, cationic or non-ionic surfactants will serve this purpose. Surfactants that will function as emulsifiers in various solvent systems are listed in a text entitled McCutcheon's Emulsifiers & Detergents, 1987 North American Edition, published by McCutcheon Division, MC Publishing Co.

Polyvinyl alcohol is a preferred surfactant when water is used as continuous phase of the emulsion. The present inventor found that polyvinyl alcohol not only facilitates emulsification of the encapsulating polymer, but also forms a coating on the particles of microencapsulated platinum group metal compound when the accompanying liquid phase is evaporated during recovery of the microcapsules. Such coatings are advantageous because they increase the storage stability of the microcapsules in one-part curable organosiloxane compositions.

In some instances, a coating of a polymeric, non-volatile surfactant such as polyvinyl alcohol on the microcapsules may reduce the transparency of cured elastomers prepared from curable organosiloxane compositions containing the microcapsules or cause discoloration of these elastomers due to heat-induced decomposition of the surfactant during curing or postcuring of the elastomer. In these instances, it may be preferable to sacrifice some storage stability of the curable composition by washing the coating of surfactant from the precipitated microcapsules and redispersing them in a suitable liquid before the microcapsules are dried and recovered in accordance with the present method. The liquid in which the microcapsules are washed and redispersed is preferably water.

The polymer in which the platinum group metal compound is encapsulated in accordance with the present method can be combined as a pre-formed polymer with the organic liquid comprising the dispersed phase of the emulsion or this polymer can be formed in-situ by polymerization of the corresponding monomers in a mixture of this organic liquid and the platinum group metal compound. The monomer can be an ethylenically unsaturated organic compound such as ethylene, styrene, vinyl chloride or vinylidene chloride.

Preferred encapsulating polymers are derived from esters of acrylic or methacrylic acid such as methyl methacrylate. This preference is based on the ability of these polymers to form clear, non-yellowing microcapsules that will not discolor organosiloxane compositions into which the microcapsules are incorporated when these compositions are heated above about 150°C. to postcure them.

Mixtures containing two or more of the aforementioned ethylenically unsaturated monomers can be used, depending upon the physical and chemical properties desired for the encapsulating polymer. Formation of the polymer is effected by heating, exposure to ultraviolet or other type of radiation or by allowing the reactants of a condensation polymerization to contact one another in the presence of an appropriate catalyst.

In accordance with a preferred embodiment of the present method, the platinum group metal compound and a preformed organic polymer are dissolved in an organic liquid and the resultant solution is emulsified in the liquid/surfactant mixture comprising the continuous phase of the emulsion in which the microencapsulated platinum group metal compound is formed. A mechanical homogenizer can be used to facilitate formation of the emulsion.

Preferred encapsulating polymers are those derived from methacrylic and/or acrylic acid esters.

In addition to being immiscible with the water or other liquid present in the continuous phase of the emulsion at temperatures up to the boiling point of the dispersed organic liquid, the boiling point of the organic liquid in the discontinuous phase of the emulsion or an azeotropic mixture of this liquid and the continuous phase of the emulsion, typically water, is preferably below the softening temperature of the polymer.

If the thermoplastic organic polymer is the preferred polymethyl methacrylate or a copolymer of methyl methacrylate and at least one additional ester of acrylic or methacrylic acid, the organic liquid present in the dispersed phase of the emulsion is preferably a low boiling halogenated hydrocarbon such as methylene chloride.

The thermoplastic organic polymer is precipitated as an encapsulant around the dispersed particles or droplets of platinum group metal compound by evaporating the organic liquid in which the polymer is dissolved. If the organic liquid is sufficiently volatile, evaporation can be achieved at ambient temperature by stirring the emulsion while passing a stream of an inert gas such as nitrogen or argon above the surface of the emulsion. Removal of higher boiling organic liquids such as toluene may require heating the emulsion under ambient or reduced pressure.

The conditions under which the organic liquid is evaporated from the discontinuous phase of the emulsion are such that the encapsulant precipitates as a matrix around the suspended droplets of platinum group metal compound. For this to occur, the platinum group metal compound must be insoluble in the organic polymer.

The final and inventive step of the present method involves atomizing the dispersion of microencapsulated platinum group metal compound and rapidly evaporating the liquid portion of the resultant droplets in a stream of heated gas. The microcapsules are then separated from the gas stream and recovered in a suitable collection device.

Drying and isolation of the microcapsules is preferably accomplished using a spray drier. A typical spray drier comprises a chamber that is supplied with a stream of heated gas, preferably air. The material to be processed, typically a dispersion of a finely divided solid in a volatile liquid, is atomized by being forced through a nozzle having micron-size orifices or by contact with the surface of a rapidly revolving disk that typically contains vanes. The resultant micron-size droplets are then entrained in a high velocity stream of heated air or other gas wherein liquid materials are rapidly evaporated. The air stream carrying the dried solid particles and volatilized liquid is then directed through a cyclone or other type of separator in which the entrained particles are recovered and collected.

The gas entering the spray drier is heated to a temperature sufficient to evaporate the liquid materials from the outer surface of the microcapsules. Because the exposure time of the microcapsules to the heated air is very short, in the order of a second, the temperature of the gas can be above the softening temperature of the encapsulating polymer. The optimum temperature will be determined by the boiling point of the liquid medium in which the microcapsules of catalyst are dispersed. When the encapsulant is one of the preferred acrylate type polymers and the liquid is water, the temperature of the incoming gas stream in the spray drier is from 180 to about 200°C. and its rate of flow is about 70 cubic feet per minute about 2 cubic meters per minute.

The size of microcapsules obtained using the present ranges from 1 up to about 50 micrometers. A particle size of from 1 to about 20 micrometers is preferred.

Microencapsulated platinum group metal compounds prepared using the present method are particularly suitable for use as hydrosilation catalysts in one-part, storage stable organosiloxane compositions. In addition to the microencapsulated catalyst, the compositions comprise (A) a polyorganosiloxane containing at least two ethylenically unsaturated hydrocarbon radicals per molecule and (B) a polyorganohydrogensiloxane containing at least two silicon-bonded hydrogen atoms per molecule.

Curable organosiloxane compositions of this type are sufficiently well known that a detailed description of such compositions is not required in this specification. Typical curable organosiloxane compositions suitable for use with the present catalysts are exemplified hereinafter.

When incorporated into curable organosiloxane compositions, platinum compounds that are microencapsulated in accordance with the present method preferably contain at least about 2 percent by weight of platinum. The reason for this limit is to minimize the amount of encapsulating organic polymer introduced into the curable organosiloxane composition. It has been observed that the presence of more than about 2 percent by weight of an encapsulating polymer such as the preferred polymethyl methacrylate substantially increases the flammability of cured organosiloxane compositions, as measured by a decrease in the limiting oxygen index, an expression of the minimum percent of oxygen in an oxygen/nitrogen mixture required to support combustion of a given test sample.

Liquid organosiloxane compositions wherein the curing catalyst is a prior art microencapsulated platinum compound containing more than about 1 weight percent platinum increase substantially in viscosity during storage at temperatures of about 60°C. These microencapsulated compounds, therefore, cannot be used in one-part curable organosiloxane compositions that will be stored at this temperature for any length of time.

The following examples describe preferred embodiments of the present method for preparing microencapsulated platinum group metal compounds and the storage stability of one-part curable organosiloxane compositions prepared using these microencapsulated compounds as curing catalysts. The examples should not be interpreted as limiting the scope of the invention defined in the accompanying claims.

Unless otherwise specified, all parts and percentages in the examples are by weight.

Example 1

This example describes the preparation of a preferred microencapsulated platinum group metal compound by precipitating a coating of a methyl methacrylate/butyl methacrylate copolymer around a finely divided form of a liquid platinum compound.

A mixture (I) of the platinum compound and encapsulating polymer was prepared by blending to homogeneity (1) 50 g. of a methyl methacrylate/butyl methacrylate copolymer available as Elvacite(R) 2013 from E.I. duPont de Nemours and Co., (2) 5.0 g. of a liquid platinum compound prepared by reacting hexachloroplatinic acid with sym-tetramethyldivinyldisiloxane and diluting the reaction product with a liquid dimethylvinylsiloxy terminated polydimethylsiloxane to achieve a platinum content of 4.31 percent, and (3) 350 cc. of methylene chloride. The preparation of the platinum compound is described in U.S. Patent No. 3,419,593.

The resultant mixture I was gradually added to a reactor equipped with a nitrogen inlet and a mechanically driven stirring blade. The reactor had previously been charged with a 560 cc. of a 4.1 weight percent aqueous solution of polyvinyl alcohol (available as Vinol 205 from Air Products and Chemicals) and a few drops of n-octanol as a foam suppressant. The stirrer was operated at a rate of 400 r.p.m. during the addition of mixture I. Following completion of the addition the size of the emulsified particles was measured using an optical microscope and found to be within the range from 1 to 120 micrometers.

A stream of argon was then passed above the emulsion for 2 1/2 days to evaporate the methylene chloride. At this time the particle size was from about 1 to about 25 microns.

The microcapsules were recovered from the aqueous dispersion using a Niro portable spray drier. The temperature of the air entering the chamber of the spray drier was maintained within the range of from 190-200°C. and the rate at which the water suspension of microcapsules was pumped to the atomizer was adjusted to maintain the temperature of the air exiting from the spray drier at 100°C. The atomizer was rotated at a speed of 40,000 r.p.m.

The weight of dried microcapsules obtained was 68.4 grams, equivalent to an 88% yield based on starting materials. The microcapsules contained 0.19% platinum, equivalent to a 72.5% yield, based on the initial weight of platinum compound.

The ability of the resultant microencapsulated platinum group metal compound prepared in accordance with the present method to function as a catalyst in a storage stable one-part organosiloxane composition curable by a platinum-catalyzed hydrosilation reaction was evaluated using a composition (Composition A) obtained by blending the following ingredients to homogeneity :

50 parts of a dimethylvinylsiloxy endblocked polydimethylsiloxane having a viscosity of about 0.4 Pa · s at 25°C.

1.5 parts of a trimethylsiloxy endblocked organosiloxane copolymer having an average of five methylhydrogensiloxane units and three dimethylsiloxane units per molecule and containing from 0.7 to 0.8 weight percent of silicon-bonded hydrogen atoms ; and

0.14 part of the microencapsulated platinum compound prepared as described in this example, equivalent to 7.3 ppm of platinum, based on the combined weight of polydiorganosiloxane and organosiloxane copolymer.

Composition A did not exhibit a significant increase in viscosity after being stored for 5 months at room temperature or after being heated for 14 days at 60°C. The composition cured within 5 minutes when heated at a temperature of 150°C.

Comparative Example

For purposes of comparison, a microencapsulated platinum compound was prepared using the washing procedure described in US-A-4789879. The method and ingredients used to prepare the aqueous suspension of the microcapsules was the same as described in Example 1, with the exception that amounts of ingredients were as follows :

A mixture of 27.64 g. of the methyl methacrylate-/butyl methacrylate copolymer, 2.36 g. of the platinum catalyst containing 4.3% platinum and 250 cc of methylene chloride were added to the aqueous polyvinyl alcohol solution. The particle size of the emulsified particles was from 1 to 125 micrometers.

Following evaporation of the methylene chloride, the reaction mixture was centrifuged to concentrate the microcapsules which had formed. The aqueous solution was decanted off, replaced with deionized water after which the dispersion was shaken and centrifuged. This washing step was repeated twice, followed by three washings with methanol and isolation of the microcapsules by filtration. The microcapsules were then washed three times with cyclic dimethylsiloxanes, a solvent for the platinum compound but not for the encapsulating polymer. The microcapsules were isolated by filtration after the washings with cyclic dimethylsiloxanes and were then allowed to dry in air for about 16 hours.

The dried product was a fluffy white powder containing some large agglomerates that could not be broken up without fracturing the microcapsules and liberating the encapsulated platinum compound. The microcapsules were found to contain 0.34 percent platinum.

The ability of the microencapsulated platinum compound to function as a curing catalyst was evaluated using the same one-part organosiloxane composition (composition A) described in Example 1.

No curing of the composition was evident after five months at room temperature. The composition began to cure in only one day at 60°C., indicating relatively poor storage stability under these conditions.

## Claims

1. A method for microencapsulating liquid or solubilized platinum group metal compounds where the platinum group metal is platinum, palladium or rhodium, the encapsulant is a water-insoluble thermoplastic organic polymer and said method comprises the following sequence of steps :

A. forming an emulsion comprising a continuous phase and a discontinuous phase, where the continuous phase comprises a first liquid and a surfactant, the discontinuous phase comprises (1) a second liquid that is immiscible with said first liquid, (2) a finely dispersed liquid or solubilized platinum group metal compound, and (3) a solubilized thermoplastic organic polymer that is both impervious to said compound and insoluble in said first liquid, the weight of said polymer being at least equal to the weight of said compound,

B. evaporating the second liquid to precipitate said polymer and form a dispersion of the microencapsulated platinum group metal compound in said first liquid ; and

C. recovering the microencapsulated platinum group metal compound by (1) atomizing a dispersion obtained in step B ; (2) entraining the atomized dispersion in a high velocity gas stream having a temperature at least equal to the boiling point of said first liquid ; (3) exposing the atomized dispersion to said gas stream for a sufficient time to evaporate substantially all of said first liquid ; and (4) recovering the microencapsulated platinum group metal compound from said gas stream as a homogeneous, free flowing powder.

## Patentansprüche

1. Verfahren zum Einschließen von flüssigen oder gelösten Metallverbindungen der Platingruppe in Mikrokapseln, wobei das Metall der Platingruppe Platin, Palladium oder Rhodium ist, das Einkapselungsmittel ein wasserunlösliches thermoplatisches organisches Polymer ist und das Verfahren die nachfolgende Schrittfolge umfaßt :

(A) Ausbilden einer Emulsion, enthaltend eine kontinuierliche Phase und eine diskontinuierliche Phase, wobei die kontinuierliche Phase eine erste Flüssigkeit und ein oberflächenaktives Mittel enthält und die diskontinuierliche Phase enthält (1) eine mit der ersten Flüssigkeit nicht mischbare zweite Flüssigkeit, (2) eine fein dispergierte flüssige oder gelöste Metallverbindung der Platingruppe und (3) ein gelöstes thermoplastisches Polymer, das beides ist, undurchlässig für die Verbindung und unlöslich in der ersten Flüssigkeit, wobei das Gewicht des Polymeren mindestens gleich dem Gewicht der Verbindung ist,

(B) Abdampfen der zweiten Flüssigkeit, um das Polymer auszufallen und eine Dispersion der in Mikrokapseln eingeschlossenen Metallverbindung der Platingruppe in der ersten Flüssigkeit auszubilden,

(C) Gewinnen der in Mikrokapseln eingeschlossenen Metallverbindung der Platingruppe durch (1) Zerstäuben der in Schritt (B) erhaltenen Dispersion, (2) Einbringen der zerstäubten Dispersion in einen Gasstrom mit hoher Geschwindigkeit und mit einer Temperatur, die mindestens gleich dem Siedepunkt der ersten Flüssigkeit ist, (3) Aussetzen der zerstäubten Dispersion dem Gasstrom für eine zum Verdampfen der im wesentlichen gesamten ersten Flüssigkeit ausreichende Zeit und (4) Gewinnen der in Mikrokapseln eingeschlossenen Metallverbindung der Platingruppe aus dem Gasstrom als ein homogenes, frei fließendes Pulver.

## Revendications

1. Un procédé de microencapsulage de composés de métaux du groupe du platine liquides ou solubilisés où le métal du groupe du platine est le platine, le palladium ou le rhodium, l'agent d'encapsulage est un polymère organique thermoplastique insoluble dans l'eau et ledit procédé comprend la séquence suivante d'étapes :

A. former une émulsion comprenant une phase continue et une phase discontinue, où la phase continue comprend un premier liquide et un agent tensio-actif, la phase discontinue comprend (1) un second liquide qui est non-miscible audit premier liquide, (2) un composé de métal du groupe du platine liquide ou solubilisé finement dispersé, et (3) un polymère organique thermoplastique solubilisé qui est à la fois imperméable audit composé et insoluble dans ledit premier liquide, la poids dudit polymère étant au moins égal au poids dudit composé,

B. évaporer le second liquide pour précipiter ledit polymère et former une dispersion dans ledit premier liquide du composé de métal du groupe du platine microencapsulé ; et

C. recueillir le composé de métal du groupe du platine microencapsulé par (1) atomisation d'une dispersion obtenue dans l'étape B ; (2) entraînement de la dispersion atomisée dans un courant gazeux à grande vitesse dont la température est au moins égale au point d'ébullition dudit premier liquide ; (3) exposition de la dispersion atomisée audit courant gazeux pendant une durée suffisante pour évaporer sensiblement la totalité dudit premier liquide ; et (4) collecte du composé de métal du groupe du platine microencapsulé en le retirant dudit courant gazeux sous forme d'une poudre homogène s'écoulant librement.